# EUROPEAN PATENT SPECIFICATION

(11) **EP 2 955 453 B1**
(45) Date of publication and mention of the grant of the patent: **15.11.2017**
(21) Application number: 13872437.2
(22) Date of filing: 25.01.2013
(51) Int. Cl.: F24F 7/08, F24F 13/10, F24F 13/20, F24F 13/08, F24F 12/00

(54) **VENTILATION DEVICE**
VENTILATIONSVORRICHTUNG
DISPOSITIF DE VENTILATION

(43) Date of publication of application: 16.12.2015
(73) Proprietor: Mitsubishi Electric Corporation, Tokyo 100-8310 (JP)
(72) Inventor: IIDA, Satoshi, Tokyo 100-8310 (JP); FUJII, Yoshinori, Tokyo 102-0073 (JP); SUGIHARA, Toshihide, Tokyo 100-8310 (JP); AOKI, Hiroki, Tokyo 100-8310 (JP); MIYAZAKI, Yuki, Tokyo 100-8310 (JP); MIZUNO, Yuji, Nakatsugawa-shi Gifu 508-0041 (JP)
(74) Representative: Moore, Graeme Patrick
(86) International application number: PCT/JP2013/051578
(87) International publication number: WO 2014/115297

(56) References cited:
- WO-A1-2005/093331
- JP-A- H09 273 793
- JP-A- H10 281 526
- JP-A- 2009 058 157
- JP-A- 2009 229 057
- JP-U- H0 175 736
- JP-U- S5 883 023
- JP-U- S6 012 120
- JP-U- S6 252 833

## Description

### Technical Field

The present invention relates to a ventilation device.

### Background Art

As a related-art ventilation device, there is proposed a wall-mount heat-exchange ventilation device in which a heat exchanger is mounted on a main body and the main body is mounted on a wall or the like to communicate indoors and outdoors with each other (see, for example, Patent Literature 1). The ventilation device disclosed in Patent Literature 1 is configured to exchange heat between air sucked from the outdoors and air sucked from the indoors, and then blow out the air in a predetermined direction through an indoor air outlet.

### Citation List

### Patent Literature

Patent Literature 1: Japanese Unexamined Patent Application Publication No. Hei 9-273793 (see, for example, Fig. 2)

### Summary of Invention

### Technical Problems

In the technology disclosed in Patent Literature 1, an airflow direction louver or the like is not arranged so that the direction of the air to be blown out through the indoor air outlet of the ventilation device is determined when the device is installed indoors. The air is caused to flow in a direction toward a floor (in a downward direction), and toward a wall parallel to a side surface of the main body (in a horizontal direction). Therefore, when a wall exists at a destination of the air flowing in the direction toward the wall parallel to the side surface of the main body (in the horizontal direction), the air thus blown out continuously impinges on the wall, which may be a cause of soiling of the wall due to dust or the like carried by the air that is taken from the outdoors.

Further, in the technology disclosed in Patent Literature 1, in order to reduce the soiling of the wall, a distance equal to or larger than predetermined spacing (about 0.083 m) needs to be secured from the wall parallel to the side surface of the main body at the time of mounting the main body so that air does not impinge on the wall. Therefore, the mounting position may be limited, and the degree of freedom of installation and the design may be degraded.

The present invention has been made to solve at least one of the problems described above, and it is therefore an object of the present invention to provide a ventilation device capable of suppressing degradation of user's comfort and design.

### Solution to Problems

The present invention provides a ventilation device as set forth in claim 1.

### Advantageous Effects of Invention

The ventilation device according to the one embodiment of the present invention includes the air-passage closing wall for changing the direction of air parallel to the side surface of the main body, which is blown out through the air outlet, thereby being capable of avoiding the soiling of the wall that may be caused when the dust carried by the outdoor air continuously impinges on the wall. Thus, it is possible to suppress the degradation of the user's comfort and the design.

### Brief Description of Drawings

[Fig. 1] Fig. 1 is a perspective view of a ventilation device according to Embodiment 1.
[Fig. 2] Fig. 2 is a horizontal sectional view of the ventilation device taken along the dotted line X of Fig. 1.
[Fig. 3] Fig. 3 is a vertical sectional view of the ventilation device taken along the dotted line Y of Fig. 1.
[Figs. 4] Fig. 4(a) is a view of a panel illustrated in Fig. 1 when viewed from a back surface side thereof, and Fig. 4(b) is a view of an airflow-direction changeable component illustrated in Fig. 1 when viewed from a back surface side thereof.
[Fig. 5] Fig. 5 is a perspective view of a state in which the airflow-direction changeable component of the ventilation device illustrated in Fig. 1 is moved to take a posture parallel to a horizontal plane.
[Figs. 6] Figs. 6 are explanatory views illustrating a state in which the airflow-direction changeable component of the ventilation device according to Embodiment 1 is at a second position.
[Figs. 7] Figs. 7 are explanatory views illustrating a state in which the airflow-direction changeable component of the ventilation device according to Embodiment 1 is at a first position.
[Fig. 8] Fig. 8 is a view of a model showing a state in which the ventilation device according to Embodiment 1 is installed in a simple indoor space.
[Fig. 9] Fig. 9 is a view of a model schematically showing the ventilation device according to Embodiment 1.
[Fig. 10] Fig. 10 is a graph showing analysis results of an air velocity distribution at a wall surface in the models shown in Figs. 8 and 9.

### Description of Embodiment

Now, an embodiment of the present invention is described with reference to the drawings.

### Embodiment 1

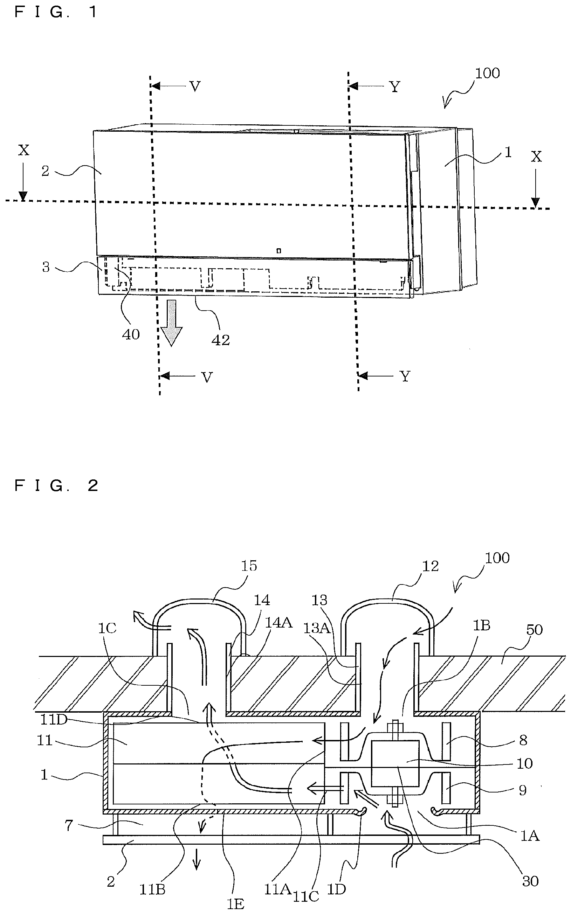

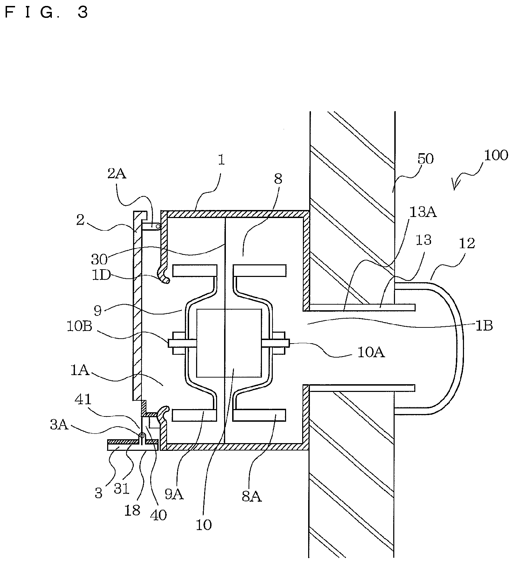

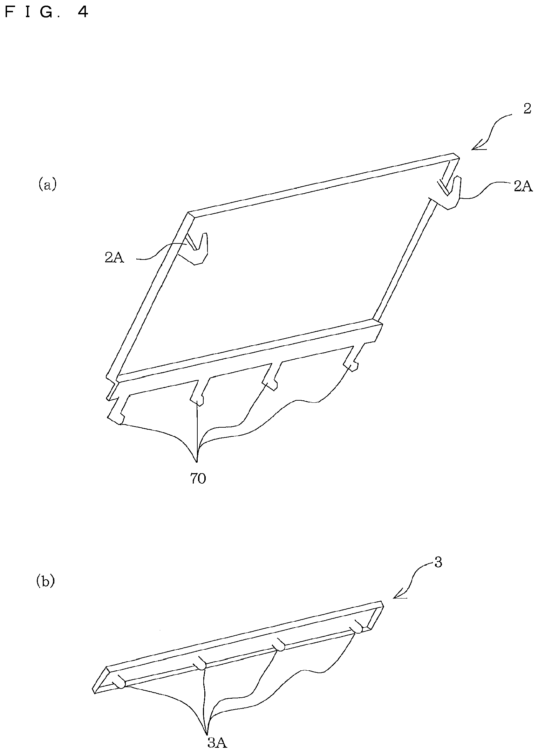

Fig. 1 is a perspective view of a ventilation device 100 according to Embodiment 1. Fig. 2 is a horizontal sectional view of the ventilation device 100 taken along the dotted line X of Fig. 1. Fig. 3 is a vertical sectional view of the ventilation device 100 taken along the dotted line Y of Fig. 1. Fig. 4(a) is a view of a panel 2 illustrated in Fig. 1 when viewed from a back surface side thereof. Fig. 4(b) is a view of an airflow-direction changeable component 3 illustrated in Fig. 1 when viewed from a back surface side thereof. Note that, the arrows illustrated in Figs. 1 and 2 indicate a flow of air. Further, Fig. 1 illustrates a lower part of the ventilation device 100 in transparent view.

The ventilation device 100 according to Embodiment 1 is improved in its airflow direction louver and supply air outlet to suppress degradation of user's comfort and design of the product. Note that, the size relationship of the constituent members illustrated in the following figures including Fig. 1 may differ from the actual size relationship. Further, in the following figures including Fig. 1, the same or corresponding parts are represented by the same reference symbols, and the same applies hereinafter. Further, the forms of the constituent elements described herein are only examples and the present invention is not limited to the forms thus described.

The ventilation device 100 is capable of taking air from the inside of an air-conditioned space (such as a room, a building, or a warehouse) to discharge the air to the outside of the air-conditioned space, and is also capable of taking air from the outside of the air-conditioned space to supply the air to the inside of the air-conditioned space. In the following, a room is described exemplarily as the air-conditioned space. Further, "outdoor air" corresponds to supply air, which is supplied from the ventilation device 100 to the indoors, whereas "indoor air" corresponds to "exhaust air", which is discharged from the ventilation device 100 to the outdoors.

The ventilation device 100 includes a main body 1 on which various devices are mounted, the panel 2 arranged on a front surface side of the main body 1, the airflow-direction changeable component 3 mounted below the panel 2 on the front surface side of the main body 1, an air supply pipe 13 connected to a back surface side of the main body 1 for taking the outdoor air, an air exhaust pipe 14 connected to the back surface side of the main body 1 for discharging the indoor air, a heat exchanger 11 for exchanging heat between the outdoor air and the indoor air thus taken, an air supply fan 8 for taking the outdoor air, and an air exhaustion fan 9 for taking the indoor air.

Further, the ventilation device 100 is mounted on a wall 50 having an opening port 13A communicating the indoors and the outdoors with each other, in which the air supply pipe 13 is arranged, and an opening port 14A communicating the indoors and the outdoors with each other, in which the air exhaust pipe 14 is arranged.

### (Main Body 1)

The main body 1 is formed into a substantially rectangular parallelepiped shape to define an outer shell. At least the air supply fan 8 for taking the outdoor air, the air exhaustion fan 9 for taking the indoor air, and the heat exchanger 11 for exchanging heat between the outdoor air and the indoor air introduced into the main body 1 are mounted on the main body 1.

The panel 2 is arranged on the front surface side of the main body 1 to define the front surface of the ventilation device 100. The airflow-direction changeable component 3 is arranged below the panel 2.

The air supply pipe 13 communicating the outdoors and the main body 1 with each other is connected to the back surface side of the main body 1. Further, the air exhaust pipe 14 communicating the outdoors and the main body 1 with each other is connected to the back surface side of the main body 1 at a position on the left of the air supply pipe 13 in front view.

An air inlet 1A through which the indoor air is sucked and a main-body air outlet 1E through which the air is discharged after the heat is exchanged by the heat exchanger 11 are formed on the front surface side of the main body 1. The main-body air outlet 1E and the air inlet 1A are formed at positions opposed to the back surface side of the panel 2. Note that, a bellmouth 1D is formed at the air inlet 1A to adjust the flow of the air sucked from the indoors into the main body 1, to thereby suppress generation of noise. Thus, the degradation of the user's comfort can be suppressed.

A supply air port 1B connected to the air supply pipe 13 and an exhaust air port 1C connected to the air exhaust pipe 14 are formed on the back surface side of the main body 1.

A partition plate 30 is arranged upright inside the main body 1 to prevent the outdoor air and the indoor air supplied into the main body 1 from being mixed with each other. A front surface side of the partition plate 30 defines an air passage through which the indoor air supplied into the main body 1 is caused to flow, whereas a back surface side of the partition plate 30 defines an air passage through which the outdoor air supplied into the main body 1 is caused to flow. A left edge portion side of the partition plate 30 in front view is arranged on a right surface side of the heat exchanger11.

### (Panel 2)

The panel 2 is arranged on the front side of the main body 1 to define a part of the front surface of the ventilation device 100. The panel 2 is a flat plate member having a substantially rectangular flat shape in front view. Under a state in which the main body 1 is mounted on the wall 50, the panel 2 is arranged in parallel to a vertical direction. Further, as illustrated in Fig. 4(b), holding portions 70 for holding the airflow-direction changeable component 3 in a freely rotatable manner are formed on a lower edge side of the panel 2.

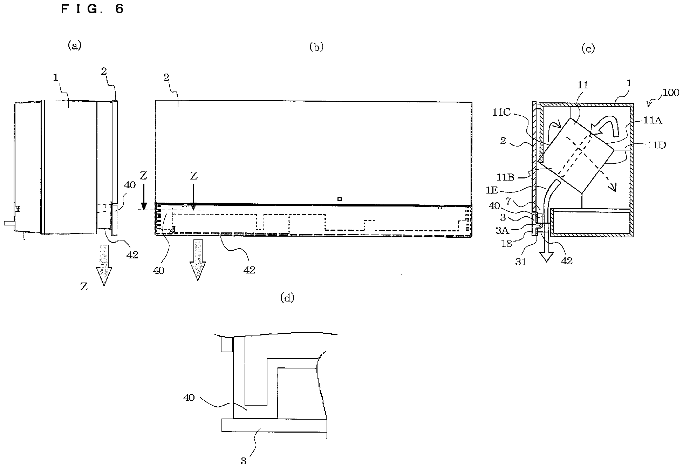

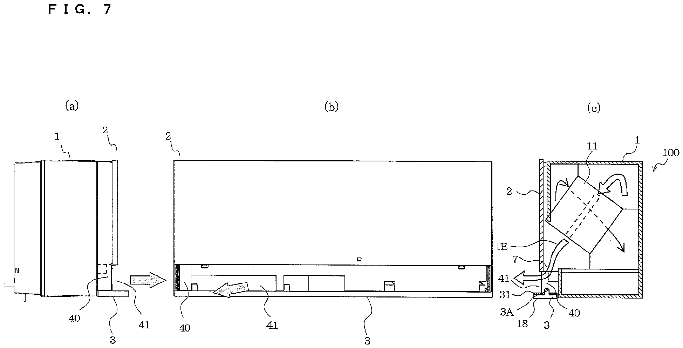

The panel 2 defines an air outlet 7 by the back surface side of the panel 2 and the front surface side of the main body 1. That is, the airflow-direction changeable component 3 is held by the holding portions 70 under a state in which a "predetermined interval" is secured between the back surface of the panel 2 and the front surface of the main body 1. Further, the air outlet 7 is formed between the "lower edge side of the back surface of the panel 2" and the "lower side of the front surface of the main body 1" (see Figs. 6 and 7).

When the airflow-direction changeable component 3 is mounted on, for example, the main body 1, the mounting accuracy of the airflow-direction changeable component 3 is determined depending on fluctuations of molded products of the main body 1, the panel 2, and the airflow-direction changeable component 3. That is, the mounting accuracy of the airflow-direction changeable component 3 is reduced by an amount corresponding to the molding fluctuations of a total of three members, namely, the main body 1, the panel 2, and the airflow-direction changeable component 3.

Thus, for example, members corresponding to the holding portions 70 may be formed on the main body 1 so that the main body 1 holds the airflow-direction changeable component 3, but the mounting accuracy of the airflow-direction changeable component 3 is reduced in this case. Therefore, it is preferred that the airflow-direction changeable component 3 be mounted on the panel 2 as in Embodiment 1.

Connecting portions 2A to be connected to the main body 1 are formed at upper parts of the panel 2 on the back surface side. With the connecting portions 2A, the panel 2 is held on the front surface side of the main body 1.

The connecting portions 2A are rotatable about connection points between the connecting portions 2A and the main body 1. That is, the panel 2 is lifted upward through the rotation of the connecting portions 2A, and hence the front surface side of the main body 1, the air exhaustion fan 9, and the like are exposed, thereby being capable of carrying out, for example, cleaning.

### (Airflow-Direction Changeable Component 3)

The airflow-direction changeable component 3 is capable of changing the direction of air to be blown out through the air outlet 7. The airflow-direction changeable component 3 is arranged below the panel 2 on the front surface side of the main body 1 in a rotatable manner. The airflow-direction changeable component 3 is a flat plate member having, for example, a substantially rectangular flat shape in front view.

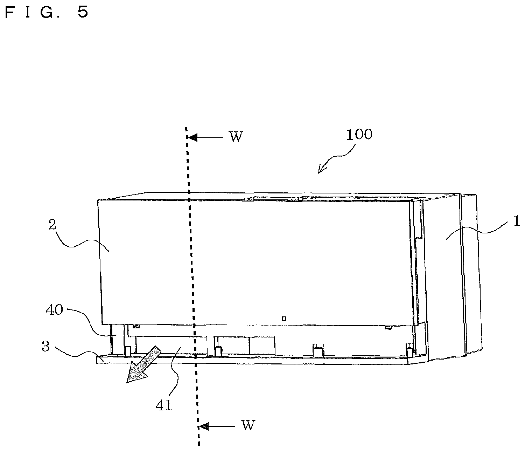

As illustrated in Fig. 4(b), on the back surface side of the airflow-direction changeable component 3, four pivot portions 3A for connecting the airflow-direction changeable component 3 and the main body 1 to each other are formed along a width direction in front view of the main body 1. With the pivot portions 3A, the airflow-direction changeable component 3 is held on the front surface side of the main body 1 in a freely rotatable manner. The airflow-direction changeable component 3 is described later in detail with reference to Figs. 5 to 7.

### (Air Supply Pipe 13 and Air Exhaust Pipe 14)

The air supply pipe 13 is arranged in the opening port 13A of the wall 50 to connect the main body 1 and the outdoors to each other. One end side of the air supply pipe 13 is connected to the supply air port 1B of the main body 1, whereas the other end side of the air supply pipe 13 is arranged on the outdoor side. Note that, an air supply hood 12 is arranged on the other end side of the air supply pipe 13 to prevent, for example, entry of rainwater from the other end side of the air supply pipe 13 to the indoor side even in the event of significant rainstorm.

The air exhaust pipe 14 is arranged in the opening port 14A of the wall 50 to connect the main body 1 and the outdoors to each other. One end side of the air exhaust pipe 14 is connected to the exhaust air port 1C of the main body 1, whereas the other end side of the air exhaust pipe 14 is arranged on the outdoor side. Note that, similarly to the other end side of the air supply pipe 13, an air exhaust hood 15 is arranged on the other end side of the air exhaust pipe 14 to prevent, for example, entry of rainwater from the other end side of the air exhaust pipe 14 to the indoor side even in the event of significant rainstorm.

The air supply hood 12 is mounted on a surface of the wall 50 on the outdoor side to prevent, for example, entry of rainwater from the other end side of the air supply pipe 13 to the indoor side even in the event of significant rainstorm. A part of the air supply hood 12 on a side mounted on the wall 50 communicates with the air supply pipe 13.

The air exhaust hood 15 is mounted on the surface of the wall 50 on the outdoor side to prevent, for example, entry of rainwater from the other end side of the air exhaust pipe 14 to the indoor side even in the event of significant rainstorm. A part of the air exhaust hood 15 on a side mounted on the wall 50 communicates with the air exhaust pipe 14.

### (Heat Exchanger 11)

The heat exchanger 11 is configured to exchange heat between the outdoor air and the indoor air introduced into the main body 1. That is, the heat exchanger 11 has a function of recovering an amount of heat of the exhaust air with the supply air. Note that, the heat exchanger 11 is configured to prevent the outdoor air and the indoor air flowing into the heat exchanger 11 from being mixed with each other. That is, in the heat exchanger 11, a supply air flow passage through which the outdoor air flowing into the heat exchanger 11 is caused to flow and an exhaust air flow passage through which the indoor air flowing into the heat exchanger 11 is caused to flow are formed in contact with each other in a heat exchangeable manner, and the supply air flow passage and the exhaust air flow passage are separated from each other. In front view, the heat exchanger 11 is arranged on the left of the air supply fan 8 and the air exhaustion fan 9 as illustrated in Fig. 2.

An inflow port 11A through which the outdoor air is caused to flow into the heat exchanger 11 and an outflow port 11B through which the air flowing into the heat exchanger 11 through the inflow port 11A is discharged after the heat is exchanged are formed in the heat exchanger 11. Further, an inflow port 11C through which the indoor air is caused to flow into the heat exchanger 11 and an outflow port 11D through which the air flowing into the heat exchanger 11 through the inflow port 11C is discharged after the heat is exchanged are formed in the heat exchanger 11.

Note that, the outdoor air is supplied by the air supply fan 8 to the inflow port 11A. Further, the air blown out through the outflow port 11B is discharged from the main body 1 through the main-body air outlet 1E.

In addition, the indoor air is supplied by the air exhaustion fan 9 to the inflow port 11C. Further, the air blown out through the outflow port 11D is discharged from the main body 1 through the exhaust air port 1C.

### (Air Supply Fan 8 and Air Exhaust Fan 9)

The air supply fan 8 includes a rotatable fan 8A and a motor 10 for rotating the fan 8A. The air supply fan 8 is configured to rotate by rotation of the motor 10 that is transmitted to the fan 8A via a shaft 10A, to thereby take the outdoor air into the main body 1 and discharge the outdoor air from the main body 1.

The air exhaustion fan 9 includes a rotatable fan 9A and the motor 10 for rotating the fan 9A. The air exhaustion fan 9 is configured to rotate through the rotation of the motor 10 that is transmitted to the fan 9A via a shaft 10B, to thereby take the indoor air into the main body 1 and discharge the indoor air from the main body 1.

The fans 8A and 9A are, for example, sirocco fans, which are connected to the shafts 10A and 10B, respectively.

The shafts 10A and 10B are connected to the fans 8A and 9A, respectively, so that the fans 8A and 9A are rotated through the transmission of the rotation of the motor 10 thereto.

As illustrated in Figs. 2 and 3, the motor 10 includes the shaft 10A arranged on the air passage side through which the supply air is caused to flow, and the shaft 10B arranged on the air passage side through which the exhaust air is caused to flow. Further, the motor 10 is arranged across the partition plate 30 on both of the air passage side through which the supply air is caused to flow and the air passage side through which the exhaust air is caused to flow.

### (Air-Passage Closing Wall 40)

An air-passage closing wall 40 is capable of reducing air to be blown out through a ventilation-device vertical plane air outlet 41 or a ventilation-device horizontal plane air outlet 42 toward a side surface of the main body in a horizontal direction. The air-passage closing wall 40 is mounted at a side surface portion of the ventilation-device vertical plane air outlet 41 below the panel 2 on the front surface side of the main body 1. The air-passage closing wall 40 is described later in detail with reference to Figs. 5 to 7.

Note that, the ventilation-device vertical plane air outlet 41 is defined to open toward the front of the ventilation device 100 when the airflow-direction changeable component 3 is at a position where the airflow-direction changeable component 3 is in parallel to the horizontal direction of the ventilation device (first position). That is, the ventilation-device vertical plane air outlet 41 is defined to blow out through the air outlet 7 toward the front of the ventilation device 100.

The ventilation-device horizontal plane air outlet 42 is defined to open in a direction toward the bottom of the ventilation device 100 when the airflow-direction changeable component 3 is at a position where the airflow-direction changeable component 3 is brought into a state of being parallel to the vertical direction of the ventilation device (second position). That is, the ventilation-device horizontal plane air outlet 42 is defined to blow out the air through the air outlet 7 toward the bottom of the ventilation device 100.

Fig. 5 is a perspective view of a state in which the airflow-direction changeable component 3 of the ventilation device 100 illustrated in Fig. 1 is moved to take a posture substantially parallel to the horizontal plane. Figs. 6 are explanatory views illustrating a state in which the airflow-direction changeable component 3 is at the second position. Figs. 7 are explanatory views illustrating a state in which the airflow-direction changeable component 3 is at the first position. Note that, the arrows illustrated in Figs. 5 to 7 indicate a flow of air. Referring to Figs. 5 to 7, the airflow-direction changeable component 3 is described in detail.

Fig. 6(a) is a side view of the state in which the airflow-direction changeable component 3 of the ventilation device 100 is at the second position. Fig. 6(b) is a front view of the state in which the airflow-direction changeable component 3 of the ventilation device 100 is at the second position. Fig. 6(c) is a vertical sectional view taken along the dotted line V of Fig. 1, for illustrating the state in which the airflow-direction changeable component 3 of the ventilation device 100 is at the second position. Fig. 6(d) is a horizontal sectional view taken along the dotted line Z of Fig. 6(c).

Fig. 7(a) is a side view of the state in which the airflow-direction changeable component 3 of the ventilation device 100 is at the first position. Fig. 7(b) is a front view of the state in which the airflow-direction changeable component 3 of the ventilation device 100 is at the first position. Fig. 7(c) is a vertical sectional view taken along the dotted line W of Fig. 5, for illustrating the state in which the airflow-direction changeable component 3 of the ventilation device 100 is at the first position.

The airflow-direction changeable component 3 is arranged below the panel 2 on the front surface side of the main body 1 in a rotatable manner, and is capable of changing the direction of the air to be blown out through the air outlet 7. The airflow-direction changeable component 3 is a plate-like member having a substantially rectangular flat shape in front view.

A heat insulating member 31 is arranged on the back surface side of the airflow-direction changeable component 3. With the heat insulating member 31, dew condensation or the like on the airflow-direction changeable component 3 can be suppressed, thereby being capable of suppressing the degradation of the user's comfort that may be caused by the drip of dew water in the indoors or the like.

On the airflow-direction changeable component 3, the four pivot portions 3A for connecting the airflow-direction changeable component 3 and the main body 1 to each other are formed along the width direction in front view of the main body 1. The pivot portions 3A of the airflow-direction changeable component 3 are held by the holding portions 70 of the panel 2 in a freely rotatable manner. The pivot portions 3A are formed on the back surface side of the airflow-direction changeable component 3 in a protruding manner. Further, the pivot portions 3A are rotatable about their rotational axes parallel to the horizontal plane.

The airflow-direction changeable component 3 is movable to the following two positions through its rotation. That is, the airflow-direction changeable component 3 is movable to the position where the airflow-direction changeable component 3 is brought into a state of being parallel to the vertical direction (second position) (see Figs. 1 and 6). Further, the airflow-direction changeable component 3 is movable to the position where the airflow-direction changeable component 3 is brought into a state of being parallel to the horizontal direction (first position) (see Figs. 5 and 7).

When the airflow-direction changeable component 3 is moved to the position where the airflow-direction changeable component 3 is brought into a state of being parallel to the vertical direction, the airflow-direction changeable component 3 is positioned on the front side relative to the pivot portions 3A. Further, when the airflow-direction changeable component 3 is moved to the position where the airflow-direction changeable component 3 is brought into a state of being parallel to the vertical direction, the air is discharged through the air outlet 7 downward to the indoors as illustrated in Figs. 6.

When the airflow-direction changeable component 3 is moved to the position where the airflow-direction changeable component 3 is brought into a state of being parallel to the horizontal direction, the airflow-direction changeable component 3 is positioned on the lower side relative to the pivot portions 3A. When the airflow-direction changeable component 3 is moved to the position where the airflow-direction changeable component 3 is brought into a state of being parallel to the horizontal direction, the air is discharged through the air outlet 7 forward to the indoors as illustrated in Figs. 7.

In this case, the surface of the airflow-direction changeable component 3 on the front side under the state in which the airflow-direction changeable component 3 is arranged at the position where the airflow-direction changeable component 3 is brought into a state of being parallel to the vertical direction is defined as "decorative surface 18".

Under the state in which the airflow-direction changeable component 3 is parallel to the vertical direction, the decorative surface 18 is parallel to a front surface side of the panel 2, and one edge portion of the airflow-direction changeable component 3 is brought into contact with the lower edge of the panel 2 (see Figs. 1 and 6). That is, the front surface of the panel 2 and the decorative surface 18 of the airflow-direction changeable component 3 are positioned substantially flush with each other, thereby being capable of improving the design of the ventilation device 100.

Note that, instead of the structure in which the front surface of the panel 2 and the decorative surface 18 of the airflow-direction changeable component 3 are substantially flush with each other, for example, the decorative surface 18 of the airflow-direction changeable component 3 may be positioned on a front or back side relative to the front surface of the panel 2. As described above, even when the panel 2 and the airflow-direction changeable component 3 have level difference therebetween in vertical sectional view thereof, the decorative surface 18 of the airflow-direction changeable component 3 is positioned "on an extension of the panel 2", thereby being capable of enhancing the design of the ventilation device 100.

The description "on an extension of the panel 2" encompasses the structure in which "the decorative surface 18 of the airflow-direction changeable component 3 is positioned on a front or back side relative to the front surface of the panel 2".

Further, instead of the structure in which one edge portion of the airflow-direction changeable component 3 is brought into contact with the lower edge of the panel 2, one edge portion of the airflow-direction changeable component 3 may be positioned along the lower edge of the panel 2 via a predetermined clearance therebetween.

Under the state in which the airflow-direction changeable component 3 is parallel to the horizontal direction, the decorative surface 18 is parallel to a bottom surface of the main body 1, and the other edge portion of the airflow-direction changeable component 3 is brought into contact with the bottom surface of the main body 1 (see Figs. 5 and 7). That is, the bottom surface of the main body 1 and the decorative surface 18 of the airflow-direction changeable component 3 are positioned substantially flush with each other, thereby being capable of enhancing the design of the ventilation device 100.

Note that, instead of the structure in which the bottom surface of the main body 1 and the decorative surface 18 of the airflow-direction changeable component 3 are substantially flush with each other, for example, the decorative surface 18 of the airflow-direction changeable component 3 may be positioned on an upper or lower side relative to the bottom surface of the main body 1. As described above, even when the main body 1 and the airflow-direction changeable component 3 have level difference therebetween in vertical sectional view thereof, the decorative surface 18 of the airflow-direction changeable component 3 is positioned "on an extension of the bottom surface of the main body 1", thereby being capable of enhancing the design of the ventilation device 100.

The description "on an extension of the bottom surface of the main body 1" encompasses the structure in which "the decorative surface 18 of the airflow-direction changeable component 3 is positioned on an upper or lower side relative to the bottom surface of the main body 1".

Further, instead of the structure in which the other edge portion of the airflow-direction changeable component 3 is brought into contact with the bottom surface of the main body 1, the other edge portion of the airflow-direction changeable component 3 may be positioned along the lower edge of the panel 2 via a predetermined clearance therebetween.

Note that, Embodiment 1 is directed to the example in which the "four" pivot portions 3A are formed along the width direction of the airflow-direction changeable component 3 in front view of the main body 1, but the number of pivot portions 3A is not limited to "four". Further, it is only necessary to form as many holding portions 70 as the pivot portions 3A on the panel 2.

In addition, the pivot portions 3A may be configured to rotate manually by the user or the like, or to rotate electrically by, for example, a drive motor.

### (Details of Air-Passage Closing Wall 40)

The air-passage closing wall 40 is capable of changing the direction of the air to be blown out through the air outlet 7 to a direction through the ventilation-device vertical plane air outlet 41 or the ventilation-device horizontal plane air outlet 42.

The air-passage closing wall 40 is a wall arranged at a predetermined interval (for example, about 1 mm to 20 mm) from the side surface portion of the ventilation-device vertical plane air outlet 41 below the panel 2 on the front surface side of the main body 1, or at a predetermined interval (for example, about 1 mm to 20 mm) from a side surface portion of the ventilation device 100.

When the airflow-direction changeable component 3 is at the position where the airflow-direction changeable component 3 is brought into a state of being parallel to the horizontal direction of the ventilation device (first position), the back surface of the airflow-direction changeable component 3 and a flat bottom surface portion of the air-passage closing wall 40 are brought into contact with each other. As a result, a wall is defined by the air-passage closing wall 40 on the left or right of the ventilation device 100 in the horizontal direction, to thereby close the flow passage of air flowing in the horizontal direction. In addition, a wall is defined by the airflow-direction changeable component 3 on the bottom surface portion, to thereby define the ventilation-device vertical plane air outlet 41 (see Figs. 5 and 7).

When the airflow-direction changeable component 3 is at the position where the airflow-direction changeable component 3 is brought into a state of being parallel to the vertical direction of the ventilation device (second position), the back surface of the airflow-direction changeable component 3 and a front surface of the air-passage closing wall 40 are brought into contact with each other. As a result, a wall is defined by the air-passage closing wall 40 on the left or right of the ventilation device 100 in the horizontal direction, to thereby close the flow passage of air flowing in the horizontal direction. In addition, a wall is defined by the airflow-direction changeable component 3 on the front surface side, to thereby define the ventilation-device horizontal plane air outlet 42 (see Figs. 1 and 6).

Note that, Embodiment 1 is directed to the example in which the air-passage closing wall 40 is a wall arranged at a predetermined interval from the side surface portion of the ventilation-device vertical plane air outlet 41 below the panel 2 on the front surface side of the main body 1, or at a predetermined interval from the side surface portion of the ventilation device 100. Alternatively, the air-passage closing wall 40 may be arranged at both of the side surface portion of the ventilation-device vertical plane air outlet 41 and the side surface portion of the ventilation device 100. Further, the air-passage closing wall 40 may be fixed in a freely removable manner, or may be fixed in a non-removable manner. Moreover, Embodiment 1 is described by taking as an example the state in which the air-passage closing wall 40 is mounted on the left of the drawing sheet, but the air-passage closing wall 40 may be mounted on the right of the drawing sheet. In addition, the size, thickness, shape, constituent material, and the like of the air-passage closing wall 40 are not particularly limited as long as the wall is defined on the left or right of the ventilation device 100 in the horizontal direction.

### [Description of Flow of Air]

The outdoor air is taken from the air supply hood 12 into the main body 1 through the air supply pipe 13. The air taken into the main body 1 is caused to flow into the heat exchanger 11 through the air supply fan 8. Then, the air flowing into the heat exchanger 11 is discharged from the heat exchanger 11 after heat is exchanged between the air and the indoor air flowing into the heat exchanger 11. Then, the air discharged from the heat exchanger 11 is blown out from the air outlet 7 through the main-body air outlet 1E, and then discharged from the ventilation device 100 with the airflow direction adjusted to the vertical direction or the horizontal direction by the action of the airflow-direction changeable component 3. At this time, the air discharged with the airflow direction adjusted to the vertical direction or the horizontal direction is discharged from the ventilation device 100 under a state in which the air flowing toward the side surface of the main body 1 in the horizontal direction is reduced by the action of the air-passage closing wall 40.

The indoor air is taken into the main body 1 through the air inlet 1A. The indoor air taken into the main body 1 is caused to flow into the heat exchanger 11 through the air exhaustion fan 9. The air flowing into the heat exchanger 11 is discharged from the heat exchanger 11 after heat is exchanged between the air and the outdoor air flowing into the heat exchanger 11. Then, the air discharged from the heat exchanger 11 is discharged to the outdoors through the air exhaust pipe 14 and the air exhaust hood 15.

### [Effects of Ventilation Device 100 according to Embodiment 1]

The ventilation device 100 according to Embodiment 1 includes the airflow-direction changeable component 3 capable of adjusting whether to blow out the air to be discharged from the main body 1 in the vertically downward direction or the horizontal direction. Thus, it is possible to suppress the degradation of the user's comfort. Further, it is possible to suppress soiling of an object other than the user, such as a dresser, due to adhesion of dust or the like carried by the supply air continuously impinging on the dresser. Moreover, it is possible to suppress stagnation of dirty air in a part of the indoors due to uneven indoor airflow distribution.

In the ventilation device 100 according to Embodiment 1, the airflow-direction changeable component 3 is capable of adjusting the air to be blown out in the horizontal direction. Thus, it is possible to suppress undesirable cooling in the user's feet caused by a cold draft.

In the ventilation device 100 according to Embodiment 1, the direction of air to be blown out is adjusted by the airflow-direction changeable component 3 instead of the panel 2, thereby suppressing a situation where dust or the like carried by the air that is taken from the outdoors adheres to the panel 2. Thus, it is possible to suppress the degradation of the design.

The ventilation device 100 according to Embodiment 1 includes the air-passage closing wall 40 capable of reducing air to be blown out from the main body 1 in the horizontal direction. Thus, it is possible to suppress soiling of a wall or the like in a house due to adhesion of dust or the like carried by the supply air continuously impinging on the wall.

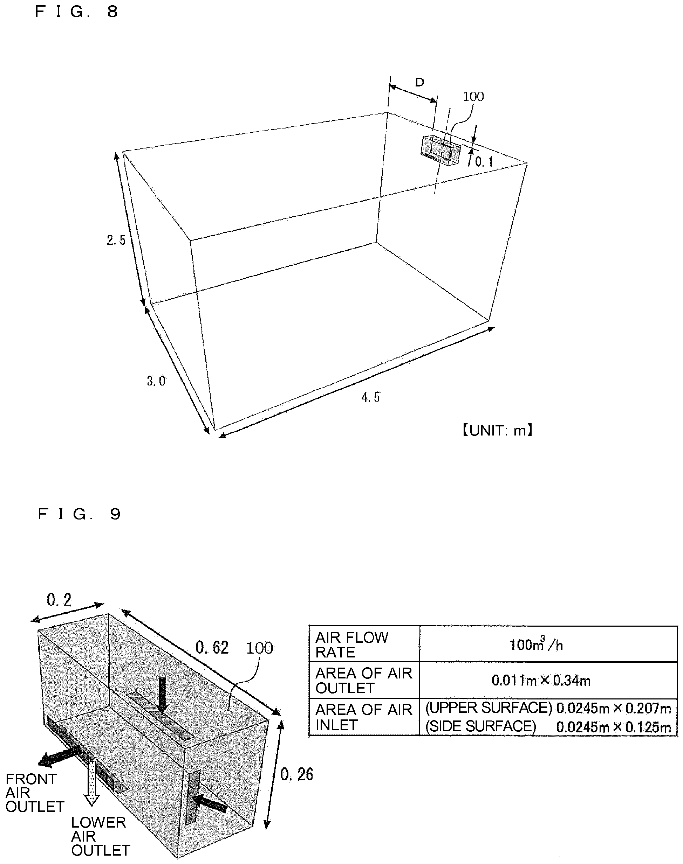

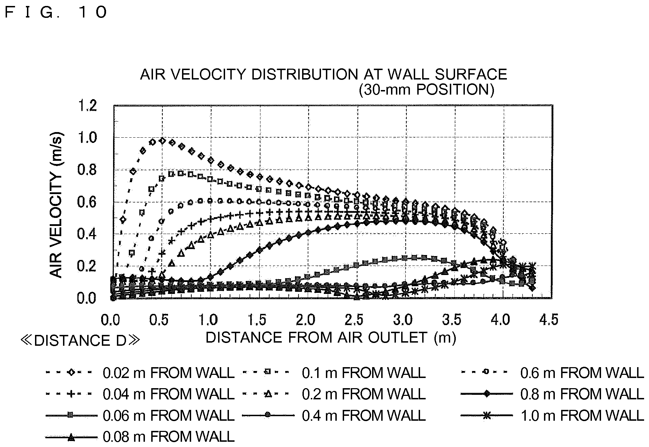

Fig. 8 is a view of a model showing a state in which the ventilation device 100 is installed in a simple indoor space. Fig. 9 is a view of a model schematically showing the ventilation device 100. Fig. 10 is a graph showing analysis results of an air velocity distribution at a wall surface in the models shown in Figs. 8 and 9. Referring to Figs. 8 to 10, description is given of the air velocity distribution at the wall surface in the indoors where the ventilation device 100 is installed. Note that, in Fig. 10, the horizontal axis represents a distance (m) from the air outlet (ventilation-device vertical plane air outlet 41 or ventilation-device horizontal plane air outlet 42), and the vertical axis represents an air velocity (m/s).

Fig. 10 shows analysis results of the air velocity distribution at the wall surface in a case where the ventilation device 100 is installed at a distance of 0.1 m from an indoor ceiling and a distance D from the wall surface (0.02 m, 0.04 m, 0.06 m, 0.08 m, 0.1 m, 0.2 m, 0.4 m, 0.6 m, 0.8 m, and 1.0 m) as shown in Fig. 8 and air is blown out through the ventilation-device vertical plane air outlet 41 or the ventilation-device horizontal plane air outlet 42 at an airflow rate of 100 m³/h.

When the airflow thus blown out is brought into contact with the wall or ceiling, the wall or ceiling may be soiled due to adhesion of dust or the like. Further, it is considered that the soil is less liable to adhere as the air velocity is lower when the airflow is brought into contact with an object. Therefore, when an air velocity of 0.8 m/s is defined as a reference, it is found based on the analysis results shown in Fig. 10 that the cause of soiling of the wall can be reduced and the degree of freedom of installation can be increased by keeping the ventilation device 100 away from the wall surface at a distance of 0.04 m (dimension D) or more. It is preferable to determine the installation position of the ventilation device 100 in consideration of the fact described above. Note that, the numerical values and dimensions shown in Figs. 8 and 9 are examples for better understanding of the air velocity distribution of the ventilation device 100, and the present invention is not limited to those numerical values and dimensions.

The ventilation device 100 according to Embodiment 1 includes the air-passage closing wall 40 capable of reducing air to be discharged from the main body 1 and blown out in the horizontal direction. Thus, in addition to the above-mentioned effects, when the ventilation device 100 is viewed from the side surface side thereof, the air-passage closing wall 40 serves as a blindfold for the complex internal components of the ventilation device 100, thereby improving the design.

### Reference Signs List

1 main body 1A air inlet 1B supply air port 1C exhaust air port
1D bellmouth 1E main-body air outlet 2 panel 2A connecting portion 3 airflow-direction changeable component 3A pivot portion 7 air outlet 8 air supply fan 8A fan 9 air exhaustion fan 9A fan 10 motor 10A shaft 10B shaft 11 heat exchanger 11A inflow port 11B outflow port 11C inflow port 11D outflow port 12 air supply hood 13 air supply pipe 13A opening port 14 air exhaust pipe 14A opening port 15 air exhaust hood 18 decorative surface 30 partition plate 31 heat insulating member 40 air-passage closing wall 41 ventilation-device vertical plane air outlet 42 ventilation-device horizontal plane air outlet 50 wall 70 holding portion 100 ventilation device

## Claims

1. A ventilation device (100), comprising:
a main body (1) having a front surface having a main-body air outlet (1E) and an air inlet (1A);
an air exhaustion fan (9) arranged inside the main body (1);
an air supply fan (8) arranged inside the main body (1);
a heat exchanger (11) configured to exchange heat between exhaustion air delivered by the air exhaustion fan (9) and supply air delivered by the air supply fan (8);
a panel (2) arranged in front of the main-body air outlet (1E) of the main body (1); the ventilation device (100) **characterized by** comprising:
an air-passage closing wall (40) provided between the main body (1) and the panel (2) and configured to restrict a flow of the supply air to be blown out through the main-body air outlet in a horizontal direction, and
an airflow-direction changeable component (3) provided below the panel (2) and configured to be rotatable between a first position and a second position different from the first position to change a direction of the supply air blown from the main-body air outlet (1E).

2. The ventilation device (100) of claim 1,
wherein the air-passage closing wall (40) is configured to,
when the airflow-direction changeable component (3) is at the first position, be in contact with the airflow-direction changeable component (3) at a bottom surface of the air-passage closing wall (40) to close the air flow passage for air flowing in the horizontal direction, and
when the airflow-direction changeable component (3) is at the second position, be in contact with the airflow-direction changeable component (3) at the front surface of the air-passage closing wall (40) to close the air flow passage for air flowing in the horizontal direction.

3. The ventilation device (100) of claim 1 or 2, wherein the airflow-direction changeable component (3) has a decorative surface (18) formed into a flat shape,
the decorative surface (18) being arranged to be
positioned on an extension of a bottom surface of the main body (1) when the airflow-direction changeable component (3) is at the first position, and
positioned on an extension of the front surface of the panel (2) when the airflow-direction changeable component (3) is at the second position.

4. The ventilation device (100) of any one of claims 1 to 3, wherein the air-passage closing wall (40) comprises air-passage closing walls (40) arranged at two portions including a side surface portion of the air outlet (7) formed by the main body (1) and the panel (2) and a side surface portion of the main body (1).

## Patentansprüche

1. Lüftungsvorrichtung (100), umfassend:
einen Hauptkörper (1), der eine Stirnfläche mit einem Hauptkörper-Luftauslass (1E) und einem Lufteinlass (1A) aufweist;
ein Abluftgebläse (9), das im Inneren des Hauptkörpers (1) angeordnet ist;
ein Luftzufuhrgebläse (8), das im Inneren des Hauptkörpers (1) angeordnet ist;
einen Wärmetauscher (11), der konfiguriert ist, Wärme zwischen der durch das Abluftgebläse (9) bereitgestellten Abluft und der durch das Luftzufuhrgebläse (8) bereitgestellten Zufuhrluft auszutauschen;
eine Platte (2), die vor dem Hauptkörper-Luftauslass (1E) des Hauptkörpers (1) angeordnet ist;
worin die Lüftungsvorrichtung (100) durch Folgendes gekennzeichnet ist: eine Luftdurchlass-Schließwand (40), die zwischen dem Hauptkörper (1) und der Platte (2) vorgesehen und so konfiguriert ist, dass ein durch den Hauptkörper-Luftauslass in eine horizontale Richtung auszublasender Strom der Zufuhrluft begrenzt wird, und
eine, die Luftströmungsrichtung änderbare Komponente (3), die unterhalb der Platte (2) vorgesehen und so konfiguriert ist, dass sie zwischen einer ersten Position und einer von der ersten Position sich unterscheidenden, zweiten Position drehbar ist, um eine Richtung der aus dem Hauptkörper-Luftauslass (1E) geblasenen Zufuhrluft zu ändern.

2. Lüftungsvorrichtung (100) nach Anspruch 1,
worin die Luftdurchlass-Schließwand (40) für Folgendes konfiguriert ist:
wenn die die Luftströmungsrichtung änderbare Komponente (3) in der ersten Position ist, in Kontakt mit der die Luftströmungsrichtung änderbaren Komponente (3) an einer Bodenfläche der Luftdurchlass-Schließwand (40) zu sein, um den Luftstromdurchlass für die in die horizontale Richtung strömende Luft zu verschließen, und
wenn die die Luftströmungsrichtung änderbare Komponente (3) in der zweiten Position ist, in Kontakt mit der die Luftströmungsrichtung änderbaren Komponente (3) an der Stirnfläche der Luftdurchlass-Schließwand (40) zu sein, um den Luftströmungsdurchlass für die in die horizontale Richtung strömende Luft zu verschließen.

3. Lüftungsvorrichtung (100) nach Anspruch 1 oder 2,
worin die die Luftströmungsrichtung änderbare Komponente (3) eine dekorative Oberfläche (18) aufweist, die in einer flachen Form ausgebildet ist,
wobei die dekorative Oberfläche (18) derart angeordnet ist, dass sie
auf einer Erweiterung einer Bodenfläche des Hauptkörpers (1) positioniert ist, wenn die die Luftströmungsrichtung änderbare Komponente (3) in der ersten Position ist, und
auf einer Erweiterung der Stirnfläche der Platte (2) positioniert ist, wenn die die Luftströmungsrichtung änderbare Komponente (3) in der zweiten Position ist.

4. Lüftungsvorrichtung (100) nach einem der Ansprüche 1 bis 3, worin die Luftdurchlass-Schließwand (40) Luftdurchlass-Schließwände (40) umfasst, die an zwei Abschnitten angeordnet sind, welche einen Seitenflächenabschnitt des Luftauslasses (7), der durch den Hauptkörper (1) und die Platte (2) ausgebildet ist, und einen Seitenflächenabschnitt des Hauptkörpers (1) umfassen.

## Revendications

1. Dispositif de ventilation (100), comprenant :
un corps principal (1) ayant une surface avant ayant une sortie d'air de corps principal (1E) et une entrée d'air (1A) ;
un ventilateur d'évacuation d'air (9) disposé à l'intérieur du corps principal (1) ;
un ventilateur d'alimentation en air (8) disposé à l'intérieur du corps principal (1) ;
un échangeur de chaleur (11) configuré pour échanger de la chaleur entre l'air d'évacuation délivré par le ventilateur d'évacuation d'air (9) et l'air d'alimentation délivré par le ventilateur d'alimentation en air (8) ;
un panneau (2) disposé devant la sortie d'air de corps principal (1E) du corps principal (1) ;
le dispositif de ventilation (100) étant **caractérisé en ce qu'**il comprend :
une paroi de fermeture de passage d'air (40) disposée entre le corps principal (1) et le panneau (2) et configurée pour restreindre un flux de l'air d'alimentation devant être soufflé à travers la sortie d'air de corps principal dans une direction horizontale, et
un composant pouvant être changé de direction de flux d'air (3) fourni en dessous du panneau (2) et configuré de manière à pouvoir tourner entre une première position et une seconde différente de la première position pour changer un direction de l'air d'alimentation soufflé à partir de la sortie d'air de corps principal (1E)

2. Dispositif de ventilation (100) selon la revendication 1,
dans lequel la paroi de fermeture de passage d'air (40) est configurée pour,
lorsque le composant pouvant être changé de direction de flux d'air (3) est dans la première position, être en contact avec le composant pouvant être changé de direction de flux d'air (3) au niveau d'une surface inférieure de la paroi de fermeture de passage d'air (40) pour fermer le passage de flux d'air pour l'air s'écoulant dans la direction horizontale, et
lorsque le composant pouvant être changé de direction de flux d'air (3) est dans la seconde position, être en contact avec le composant pouvant être changé de direction de flux d'air (3) au niveau la surface avant de la paroi de fermeture de passage d'air (40) pour fermer le passage de flux d'air pour l'air s'écoulant dans la direction horizontale.

3. Dispositif de ventilation (100) selon la revendication 1 ou 2,
dans lequel le composant pouvant être changé de direction de flux d'air (3) a une surface décorative (18) formée dans une forme plate,
la surface décorative (18) étant disposée pour être positionnée sur une extension d'une surface inférieure du corps principal (1) lorsque le composant pouvant être changé de direction de flux d'air (3) est dans la première position, et
positionnée sur une extension de la surface avant du panneau (2) lorsque le composant pouvant être changé de direction de flux d'air (3) est dans la deuxième position.

4. Dispositif de ventilation (100) selon l'une quelconque des revendications 1 à 3, dans lequel la paroi de fermeture de passage d'air (40) comprend des parois de fermeture de passage d'air (40) disposées au niveau de deux parties comprenant une partie de surface latérale de la sortie d'air (7) formée par le corps principal (1) et le panneau (2) et une partie de surface latérale du corps principal (1).
